# EUROPEAN PATENT SPECIFICATION

(11) **EP 3 704 389 B1**
(45) Date of publication and mention of the grant of the patent: **05.04.2023**
(21) Application number: 18872038.7
(22) Date of filing: 30.10.2018
(51) Int. Cl.: F16L 23/036, F16B 31/04

(54) **PIN ASSEMBLY FOR AXIAL AND RADIAL TENSIONING OF ELEMENTS JOINED BY SCREWS**
STIFTANORDNUNG ZUM AXIALEN UND RADIALEN SPANNEN VON MIT SCHRAUBEN VERBUNDENEN ELEMENTEN
ENSEMBLE BROCHE DESTINÉ AU TENSIONNEMENT AXIAL ET RADIAL D'ÉLÉMENTS RELIÉS PAR DES VIS

(30) Priority: 01.11.2017 NO 20171737
(43) Date of publication of application: 09.09.2020
(73) Proprietor: Bondura Technology AS, 4349 Bryne (NO)
(72) Inventor: KARLSEN, Øyvind, 4018 Stavanger (NO)
(74) Representative: Håmsø Patentbyrå AS
(86) International application number: PCT/NO2018/050261
(87) International publication number: WO 2019/088846

(56) References cited:
- EP-A1- 1 936 210
- WO-A1-99/64201
- DE-A1- 3 640 521
- GB-A- 2 181 511
- GB-A- 2 222 443
- JP-A- H09 329 123
- US-A- 5 083 889
- US-A1- 2007 243 045
- US-B1- 6 938 450
- US-E- R E33 490

## Description

The invention relates to a pin assembly comprising a pin which, in a first end portion, is provided with a pin head and, in a second end portion, is provided with a threaded portion arranged to receive a nut, the pin head and the nut being provided with conical circumferential surfaces falling towards respective first, outward-facing end faces on the pin head and the nut; internally conical, radially expandable bearing sleeves which are axially displaceable on the conical circumferential surfaces of the pin head and the nut, respectively, and are provided with cylindrical, external sleeve surfaces.

The invention also relates to a flange joint comprising a first flange and a second flange, each including a set of pin holes corresponding with each other, and wherein each pin hole is provided with a recessed pin-hole end portion facing away from a flange abutment surface, the recessed pin-hole end portions being defined by cylindrical wall surfaces and bottom surfaces which are perpendicular to centre axes of the pin holes; and a pin assembly comprising a pin which, in a first end portion, is provided with a pin head and, in a second end portion, is provided with a threaded portion arranged to receive a nut, the pin head and the nut being provided with conical circumferential surfaces falling towards respective first, outward-facing end faces on the pin head and the nut; internally conical, radially expandable bearing sleeves which are axially displaceable on the conical circumferential surfaces of the pin head and the nut, respectively, and are provided with cylindrical, external sleeve surfaces arranged to rest supportingly against the cylindrical wall surfaces of the recessed pin-hole end portions.

When joining large structures, for example pipe flanges, by means of screws extending through pin holes, the screw diameter will, as a rule, be so large that the frictional forces between a screw head and the abutment of the screw head, possibly between a nut and the abutment of the nut, will prevent or complicate precise and even tightening of the screws to a desired level. At the same time, it is important to centre the screws in the pin holes to achieve even stressing of the screws and accurate relative positioning of the structures to be joined.

Patent publication GB2181511 A discloses an expansion bolt especially for use in flanged couplings in drive shafting. A stud bolt is shown, having a central, tapered shank and screw-threaded end portions for receiving nuts. At least one of said nuts is provided with threaded holes for receiving tightening screws.

The invention has for its object to remedy or reduce at least one of the drawbacks of the prior art or at least provide a useful alternative to the prior art.

The object is achieved through the features that are specified in the description below and in the claims that follow.

In what follows, the terms "flange", "flange connection", "flange joint" and the like are not restricted to referring only to flanges on pipes, but also cover corresponding elements forming joining details on machine components, frame structures, etc.

The present invention is defined by a pin assembly according to claim 1 and by a flange joint according to claim 8.

The invention provides a pin assembly for joining flange connections by means of at least one pin, the at least one pin being provided, in a first end portion, with a pin head and being provided, in a second end portion, with a nut that engages with the screw via a threaded portion. The pin head has a circumferential surface which is conically tapering towards an outward-facing end of the pin head. Correspondingly, the nut has a circumferential surface which is conically tapering towards an end of the nut. In an alternative embodiment, the pin head may be formed of a second conical nut which engages with the pin in a second threaded portion. In what follows, the term "pin head" will be used for this embodiment as well.

At least one of the pin head and the nut is provided with a set of first threaded holes which are arranged in the axial direction of the pin head and the nut, respectively, and extend through the pin head and the nut, respectively, from a first end portion to a second end portion of the pin head and the nut, respectively. Said first threaded holes are preferably evenly distributed along a first pitch circle. Said set of first threaded holes are arranged to receive a set of first clamping bolts. The pin head and the nut are also provided with sets of second threaded holes which are arranged in the axial directions of the pin head and the nut, respectively, and extend through the pin head and the nut, respectively, from first end portions to second end portions of the pin head and the nut, respectively. Said second threaded holes are preferably evenly distributed along said first pitch circle, possibly along a second pitch circle. Said second threaded holes are arranged to receive a set of second clamping bolts. The set of first threaded holes may have the same diameter and thread pitch as the set of second threaded holes or be different.

The pin assembly includes bearing sleeves which are arranged to be moved in on the conical pin head and the conical nut, respectively. The bearing sleeves are internally conical and radially expandable and have substantially cylindrical external surfaces.

Each end of the pin assembly is provided with a clamping plate which is arranged to rest against an end face on the respective bearing sleeve. The clamping plate is provided with a set of through bolt holes corresponding with the set of second threaded holes arranged in the pin head and the nut, respectively. Said set of second clamping bolts extend from the clamping plate and into the set of second bolt holes of the pin head and the nut, respectively.

Each of the flanges that form part of a flange connection which is to be joined is provided with corresponding sets of pin holes arranged to receive the pin assembly. Pin-hole end portions facing away from an abutment surface on each flange are cylindrically recessed with bottom surfaces which are preferably perpendicular to the centre axes of the pin holes and are arranged to receive the bearing sleeves of the pin assembly. When the flanges are positioned with corresponding pin holes in line and joined by pins having been passed through the flanges and the nut having been screwed in on each of the pins so that the pin head and the nut are resting against bottom surfaces in the respective recessed pin-hole end portions, the bearing sleeves are slipped over each pin head and each nut, respectively, so that the pins are centred in the pin holes by the radial expansion of the bearing sleeves until the cylindrical, external bearing-sleeve surfaces are resting against the widened end portions of the respective pin holes. Then the pins are tightened by the first clamping bolts being screwed into the respective pin heads and nuts with a desired torque into abutment against the bottom surfaces of the recessed end portions of the respective pin holes. With that, the pins of the flange connection are subjected to a desired tensioning. Then the clamping plates are fitted as they are being placed in abutment against the end faces of the bearing sleeves, which project from the recessed pin-hole end portions in the flanges. The second clamping bolts are passed through the bolt holes of the clamping plates and screwed into the second threaded holes of the pin head and the nut, respectively, and are tightened so that the bearing sleeves are displaced further in over the conical circumferential surfaces of the pin head and the nut, respectively, and expand further into abutment against the walls of the surrounding pin-hole end portions. Thereby the pin assembly has also provided a radial clamping of the flange connection.

The pin assembly may include a washer which is placed between the one of the pin head and the nut that is provided with the set of first clamping bolts and the bottom surface of the respective recessed pin-hole end portion of the flange. The washer may be formed from a material of greater hardness than the flange, for example by the washer being formed from hardened steel, so that the first clamping bolts will not deform the bottom surface against which they are resting.

It may also be an advantage if the first clamping bolts are formed with greater tensile and compressive strengths than the second clamping bolts, since, as a rule, the first clamping bolts will have to be tightened to a greater torque than the second clamping bolts.

The first threaded holes and the second threaded holes may be distributed on a common pitch circle or on separate pitch circles. It is an advantage if the threaded holes of each set of first and second threaded holes are evenly spaced angularly.

The invention is defined by the independent claims. The dependent claims define advantageous embodiments of the invention.

In a first aspect, the invention relates, more specifically, to a pin assembly comprising
a pin which, in a first end portion, is provided with a pin head and, in a second end portion, is provided with a threaded portion arranged to receive a nut, the pin head and the nut being provided with conical circumferential surfaces falling towards respective first, outward-facing end faces on the pin head and the nut;
internally conical, radially expandable bearing sleeves which are axially displaceable on the conical circumferential surfaces of the pin head and nut, respectively, and are provided with cylindrical, external sleeve surfaces;
   wherein
at least one of the pin head and the nut being provided with a set of first, threaded holes extending through the pin head and the nut, respectively, substantially parallel to centre axes through the pin head and the nut, respectively and a set of second, threaded holes extending into the pin head and the nut, respectively, from the respective first, outward-facing end faces of the pin head and the nut, substantially parallel to the centre axes through the pin head and the nut, respectively;
a set of first clamping bolts being arranged in the first threaded holes;
clamping plates being arranged to rest against an end face on each of the bearing sleeves, as sets of second clamping bolts extend through bolt holes in the clamping plates and into the sets of second threaded holes in the pin head and the nut, respectively.

A washer may be arranged at a second, inward-facing end face of the one of the pin head and the nut that is provided with the set of first clamping bolts.

The washer may be formed from a hardened material.

The first threaded holes and the second threaded holes may be distributed on a common pitch circle. Alternatively, the first threaded holes and the second threaded holes may be distributed on separate pitch circles.

The threaded holes of each set of first and second threaded holes may be evenly spaced angularly.

The pin head may be formed of a second nut arranged on a second threaded portion on the pin.

In a second aspect, the invention relates, more specifically, to a flange joint comprising:
the pin assembly according to the first aspect, and
a first flange and a second flange, each comprising a set of corresponding pin holes provided with recessed pin-hole end portions facing away from a flange abutment surface, the recessed pin-hole end portions being defined by cylindrical wall surfaces and bottom surfaces that are perpendicular to centre axes of the pin holes; wherein the cylindrical, external sleeve surfaces are arranged to rest supportingly against the cylindrical wall surfaces of the recessed pin-hole end portions, and wherein the set of first clamping bolts are arranged to rest supportingly with bolt end faces against the bottom surfaces of the recessed pin-hole end portions.

A washer may be arranged at a second, inward-facing end face on the one of the pin head and the nut that is provided with the set of first clamping bolts.

The washer may be formed from a hardened material.

The pin head may be formed of a second nut arranged on a second threaded portion on the pin.

In what follows, examples of preferred embodiments are described, which are visualized in the accompanying drawings, in which:
- Figure 1: shows, in perspective, a pin assembly according to the invention;
- Figure 2: shows, in perspective, the pin assembly partially assembled;
- Figure 3: shows the pin assembly, partly in a side view, partly in an axial section, as a connection between two flanges, and
- Figure 4: shows a portion of a pin, in which a pin head has been replaced by a second nut.

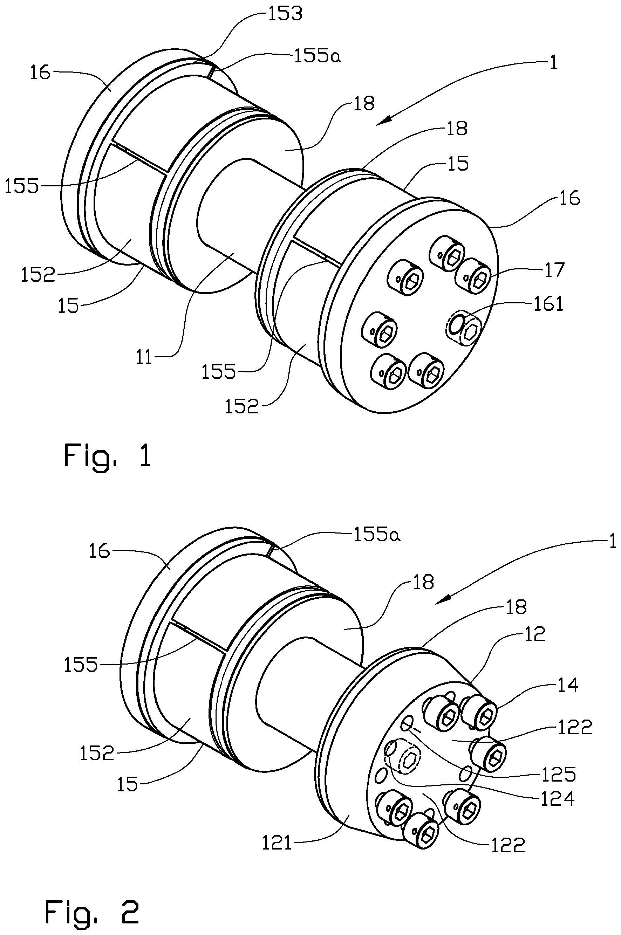

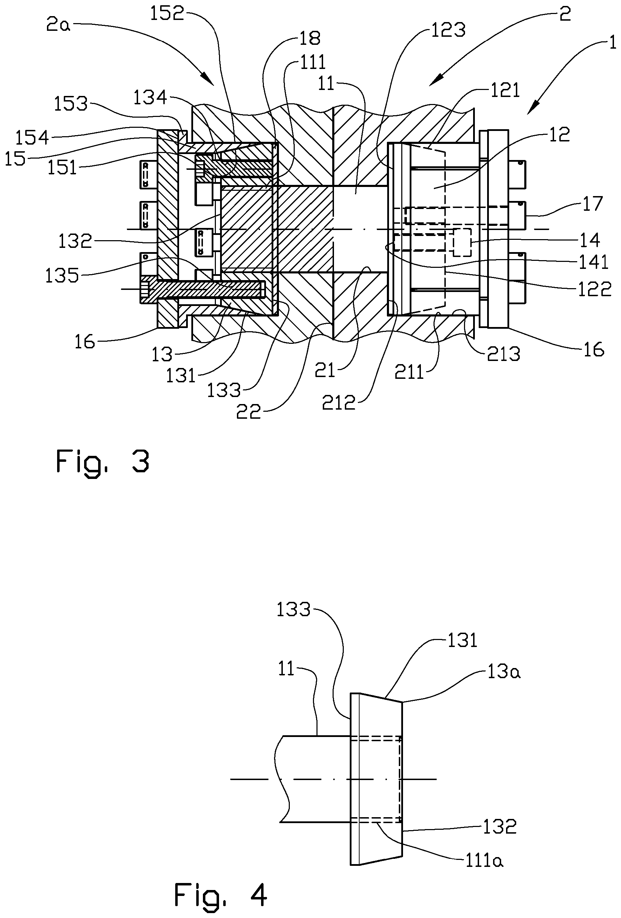

Reference is first made to figures 1, 2 and especially figure 3. A pin assembly 1 comprises a pin 11 provided with a pin head 12. An end portion of the pin 11 is provided with a threaded portion 111 for receiving a nut 13 (see figure 3). The pin head 12 and the nut 13 are provided with conical circumferential surfaces 121 and 131, respectively, and are arranged to supportingly receive respective bearing sleeves 15, each bearing sleeve 15 being provided with a conical internal sleeve surface 151 which is complementary to the circumferential surfaces 121 and 131 of the pin head 12 and the nut 13, respectively. Clamping plates 16 are arranged to rest supportingly against an end face 154 on each of the bearing sleeves 15. Placed on the pin 11, within the pin head 12 and the nut 13, there are washers 18.

The pin head 12 and the nut 13 are provided with several first threaded holes 124 and 134, respectively, directed axially, extending through the pin head 12 and the nut 13, respectively, from a first head end face 122 and a first nut end face 132, respectively, to a second head end face 123 and a nut end face 133, respectively, for receiving sets of first clamping bolts 14 which can rest with bolt end faces 141 against the respective washers 18.

The pin head 12 and the nut 13 are additionally provided with several second threaded holes 125 directed axially, extending into the pin head 12 and the nut 13, respectively, from a first head end face 122 and a first nut end face 132, respectively, and being arranged to receive sets of second clamping bolts 17. The second threaded holes 125 are arranged on a pitch circle and with an angular distance corresponding to that of threaded bolt holes 161 extending through the clamping plates 16.

Each of the bearing sleeves 15 is provided with a cylindrical external sleeve surface 152 which is penetrated by several slits 155. A salient end portion of the bearing sleeve 15 is penetrated by an end-portion slit 155a forming an extension of one of the slits 155 penetrating the sleeve surfaces 151, 152. The salient end portion 153 forms an outward-facing end face 154.

Reference is now made to figure 3, in which the pin assembly 1 is shown in a joint of a first flange 2 and a second flange 2a, in which respective flange abutment surfaces 22 are resting supportingly against each other. Each of the flanges 2, 2a is provided with a pin hole 21 in which a pin-hole end portion 211 facing away from the flange abutment surface 22 is recessed, the recessed pin-hole end portion 211 forming a bottom surface 212 and a cylindrical wall surface 213. The bottom surface 212 forms an axial clamping face for the pin assembly 1, and the wall surface 213 forms a radial clamping face for the pin assembly 1 when the flanges 2, 2a are being joined.

Before installing the pin assembly 1 in a pair of corresponding pin holes 21 in opposite flanges 2, 2a, the nut 13 and the respective second clamping bolts 17, clamping plate 16, bearing sleeve 15 and washer 18 are removed. The first clamping bolts 14 of the pin head 12 are unscrewed sufficiently so that the clamping bolts 14 do not project from the inward-facing second head end face 123 of the pin head 12. The pin 11 is inserted into the corresponding pin holes 21, and the nut 13 with the respective washer 18 and bearing sleeve 15 is connected to the pin 11 and tightened by light rotation of the nut 13. The bearing sleeves 15 are slipped onto the conical circumferential surfaces 121 and 131, respectively, of the pin head 12 and the nut 13, respectively, so that the bearing sleeves 15 centre the pin 11 in the pin holes 21. The pin 11 is then clamped axially by the first clamping bolts 14 being screwed into the pin head 12 and the nut 13, respectively, until abutment by the bolt end faces 141 against the respective washers 18 with the desired torque. Then the clamping plates 16 are tightened against the end faces 154 of the bearing sleeves 15 by means of the second clamping bolts 17 in order thereby to give the pin assembly 1 a radial clamping in the flanges 2, 2a.

If the flanges 2, 2a are formed from a sufficiently hard material, the pin assembly 1 may be used without washers 18. But under normal circumstances, providing washers 18 of a preferred material hardness will be easier and more cost-effective than providing flanges 2, 2a of a sufficient material hardness.

Reference is now made to figure 4. In an alternative embodiment, the pin head 12 is replaced by a second nut 13a, the pin 11 being provided with a second threaded portion 111a which is arranged to receive the second nut 13a. The second nut 13a has a design which is identical to the design of the first nut 13, with respect to both threaded holes 134, 135, the circumferential surface 131 and nut end faces 132, 133.

It should be noted that all the above-mentioned embodiments illustrate the invention, but do not limit it, and persons skilled in the art may construct many alternative embodiments without departing from the scope of the attached claims. In the claims, reference numbers in brackets are not to be regarded as restrictive.

The use of the verb "to comprise" and its different forms does not exclude the presence of elements or steps that are not mentioned in the claims. The indefinite article "a" or "an" before an element does not exclude the presence of several such elements.

The fact that some features are indicated in mutually different dependent claims does not indicate that a combination of these features cannot be used with advantage.

## Claims

1. A pin assembly (1) comprising
a pin (11) which, in a first end portion, is provided with a pin head (12) and, in a second end portion, is provided with a threaded portion (111) arranged to receive a nut (13), the pin head (12) and the nut (13) being provided with conical circumferential surfaces (121, 131) falling towards respective first, outward-facing end faces (122, 132) of the pin head (12) and the nut (13);
internally conical, radially expandable bearing sleeves (15) which are axially displaceable on the conical circumferential surfaces (121, 132) of the pin head (12) and the nut (13), respectively, and are provided with cylindrical, external sleeve surfaces (152);
wherein:
at least one of the pin head (12) and the nut (13) is provided with a set of first threaded holes (124, 134) extending through the pin head (12) and the nut (13), respectively, substantially parallel to centre axes through the pin head (12) and the nut (13), respectively, and a set of second threaded holes (125, 135) extending into the pin head (12) and the nut (13), respectively, from the respective first, outward-facing end faces (122, 132) of the pin head (12) and the nut (13), substantially parallel to the centre axes through the pin head (12) and the nut (13), respectively;
a set of first clamping bolts (14) are arranged in the first threaded holes (124, 134);
clamping plates (16) are arranged to rest against an end face (154) on each of the bearing sleeves (15), as sets of second clamping bolts (17) extend through bolt holes (161) in the clamping plates (16) and into the sets of second threaded holes (125, 135) of the pin head (12) and the nut (13), respectively.

2. The pin assembly (1) according to claim 1, wherein a washer (18) is arranged at a second, inward-facing end face (123, 133) on the one of the pin head (12) and the nut (13) that is provided with a set of first clamping bolts (14).

3. The pin assembly (1) according to claim 2, wherein the washer (18) is formed from a hardened material.

4. The pin assembly (1) according to claim 1, wherein the first threaded holes (124, 134) and the second threaded holes (125, 135) are distributed on a common pitch circle.

5. The pin assembly (1) according to claim 1, wherein the first threaded holes (124, 134) and the second threaded holes (125, 135) are distributed on separate pitch circles.

6. The pin assembly (1) according to claim 1, wherein the threaded holes of each set of first and second threaded holes (124, 134; 125, 135) are evenly spaced angularly.

7. The pin assembly (1) according to claim 1, wherein the pin head (12) is formed of a second nut (13a) arranged on a second threaded portion (111a) on the pin (11).

8. A flange joint comprising:
the pin assembly (1) according to claim 1; and
first and second flanges (2, 2a), each comprising a set of corresponding pin holes (21) provided with recessed pin-hole end portions (211) facing away from a flange abutment surface (22), the recessed pin-hole end portions (211) being defined by cylindrical wall surfaces (213) and bottom surfaces (212) that are perpendicular to centre axes of the pin holes (21); wherein the cylindrical, external sleeve surfaces (152) of the bearing sleeves (15) are arranged to rest supportingly against the cylindrical wall surfaces (213) of the recessed pin-hole end portions (211), and
wherein the set of first clamping bolts (14) are arranged to rest supportingly with bolt end faces (141) against the bottom surfaces (212) of the recessed pin-hole end portions (211).

9. The flange joint according to claim 8, wherein a washer (18) is arranged at a second, inward-facing end face (123, 133) on the one of the pin head (12) and the nut (13) that is provided with a set of first clamping bolts (14).

10. The flange joint according to claim 9, wherein the washer (18) is formed from a hardened material.

11. The flange joint according to claim 8, wherein the pin head (12) is formed of a second nut (13a) arranged on a second threaded portion (111a) on the pin (11).

## Patentansprüche

1. Eine Stiftanordnung (1), umfassend
einen Stift (11), der in einem ersten Endabschnitt mit einem Stiftkopf (12) versehen ist und, in einem zweiten Endabschnitt, mit einem Gewindeabschnitt (111) versehen ist, der so angeordnet ist, dass er eine Mutter (13) aufnimmt, wobei der Stiftkopf (12) und die Mutter (13) mit konischen Umfangsflächen (121, 131) versehen sind, die in Richtung auf die entsprechenden ersten, nach außen weisenden Endflächen (122, 132) des Stiftkopfes (12) und der Mutter (13) abfallen;
innen konische, radial erweiterbare Lagerhülsen (15), die auf den konischen Umfangsflächen (121, 132) des Stiftkopfes (12) bzw. der Mutter (13) axial verschiebbar und mit zylindrischen, äußeren Hülsenoberflächen (152) versehen sind;
wobei:
mindestens einer von dem Stiftkopf (12) oder der Mutter (13) mit einem Satz von ersten Gewindebohrungen (124, 134) versehen ist, die sich durch den Stiftkopf (12) bzw. die Mutter (13) erstrecken, im Wesentlichen parallel zu den Mittelachsen durch den Stiftkopf (12) bzw. die Mutter (13), sowie mit einem Satz von zweiten Gewindebohrungen (125, 135), die sich in den Stiftkopf (12) bzw. die Mutter (13) erstrecken, und zwar von den jeweiligen ersten, nach außen weisenden Endflächen (122, 132) des Stiftkopfes (12) und der Mutter (13), im Wesentlichen parallel zu den Mittelachsen durch den Stiftkopf (12) bzw. die Mutter (13);
ein Satz von ersten Befestigungsschrauben (14) in den ersten Gewindebohrungen (124, 134) angeordnet ist;
Klemmplatten (16) so angeordnet sind, dass sie an einer Endfläche (154) an jeder der Lagerhülsen (15) anliegen, wobei sich Sätze von zweiten Befestigungsschrauben (17) durch Schraubenlöcher (161) in den Klemmplatten (16) und in die Sätze von zweiten Gewindebohrungen (125, 135) des Stiftkopfes (12) bzw. der Mutter (13) erstrecken.

2. Die Stiftanordnung (1) nach Anspruch 1, wobei eine Unterlegscheibe (18) an einer zweiten, nach innen weisenden Endfläche (123, 133) an dem einen von dem Stiftkopf (12) und der Mutter (13), der oder die mit einem Satz von ersten Befestigungsschrauben (14) versehen ist, angeordnet ist.

3. Die Stiftanordnung (1) nach Anspruch 2, wobei die Unterlegscheibe (18) aus einem gehärteten Material besteht.

4. Die Stiftanordnung (1) nach Anspruch 1, wobei die ersten Gewindebohrungen (124, 134) und die zweiten Gewindebohrungen (125, 135) auf einem gemeinsamen Lochkreis verteilt sind.

5. Die Stiftanordnung (1) nach Anspruch 1, wobei die ersten Gewindebohrungen (124, 134) und die zweiten Gewindebohrungen (125, 135) auf getrennten Lochkreisen verteilt sind.

6. Die Stiftanordnung (1) nach Anspruch 1, wobei die Gewindebohrungen jedes Satzes der ersten und zweiten Gewindebohrungen (124, 134; 125, 135) in gleichmäßigen Winkelabständen verteilt sind.

7. Die Stiftanordnung (1) nach Anspruch 1, wobei der Stiftkopf (12) von einer zweiten Mutter (13a) gebildet wird, die auf einem zweiten Gewindeabschnitt (111a) an dem Stift (11) angeordnet ist.

8. Eine Flanschverbindung, umfassend:
die Stiftanordnung (1) nach Anspruch 1; und
einen ersten und zweiten Flansch (2, 2a), die jeweils einen Satz entsprechender Stiftlöcher (21) umfassen, die mit eingelassenen Endabschnitten des Stiftlochs (211) versehen sind, die von einer Anlagefläche des Flanschs (22) wegweisen, wobei die eingelassenen Endabschnitte des Stiftlochs (211) durch zylindrische Wandflächen (213) und Bodenflächen (212) definiert sind, die senkrecht zu den Mittelachsen der Stiftlöcher (21) verlaufen;
wobei die zylindrischen, äußeren Hülsenoberflächen (152) der Lagerhülsen (15) so angeordnet sind, dass sie stützend an den zylindrischen Wandoberflächen (213) der eingelassenen Endabschnitte des Stiftlochs (211) anliegen, und
wobei der Satz von ersten Befestigungsschrauben (14) so angeordnet ist, dass er mit den Endflächen des Stifts (141) stützend an den Bodenoberflächen (212) der eingelassenen Endabschnitte des Stiftlochs (211) anliegt.

9. Die Flanschverbindung nach Anspruch 8, wobei eine Unterlegscheibe (18) an einer zweiten, nach innen weisenden Endfläche (123, 133) an dem einen von dem Stiftkopf (12) und der Mutter (13), der oder die mit einem Satz von ersten Befestigungsschrauben (14) versehen ist, angeordnet ist.

10. Die Flanschverbindung nach Anspruch 9, wobei die Unterlegscheibe (18) aus einem gehärteten Werkstoff besteht.

11. Die Flanschverbindung nach Anspruch 8, wobei der Stiftkopf (12) von einer zweiten Mutter (13a) gebildet wird, die auf einem zweiten Gewindeabschnitt (111a) an dem Stift (11) angebracht ist.

## Revendications

1. Un ensemble broche (1) comprenant
une broche (1) qui, dans une première partie d'extrémité, est pourvue d'une tête de broche (12) et, dans une seconde partie d'extrémité, est pourvue d'une partie filetée (111) arrangée pour recevoir un écrou (13), la tête de broche (12) et l'écrou (13) disposant de surfaces circonférentielles coniques (121, 131) retombant vers les premières faces d'extrémité orientées vers l'extérieur (122, 132) de la tête de broche (12) et de l'écrou (13) respectives;
des manchons de palier (15) internement coniques et radialement extensibles pouvant être déplacés axialement sur les surfaces circonférentielles coniques (121, 132) de la tête de broche (12) et de l'écrou (13), respectivement, et disposant de surfaces de manchon (152) externes cylindriques ;
dans lequel :
entre la tête de broche (12) et l'écrou (13), au moins un dispose d'un ensemble de premiers trous filetés (124, 134) s'étendant à travers la tête de broche (12) et l'écrou (13), respectivement, substantiellement parallèle aux axes centraux à travers la tête de broche (12) et l'écrou (13), respectivement, et un ensemble de seconds trous filetés (125, 135) s'étendant jusqu'à la tête de broche (12) et l'écrou (13), respectivement, à partir des premières faces d'extrémité orientées vers l'extérieur (122, 132) de la tête de broche (12) et de l'écrou (13) respectives, substantiellement parallèle aux axes centraux à travers la tête de broche (12) et l'écrou (13), respectivement ;
un ensemble de vis de serrage (14) sont arrangés dans les premiers trous filetés (124, 134);
des plaques de serrage (16) sont arrangées pour s'appuyer contre une face d'extrémité (154) sur chacun des manchons de palier (15), pendant que les ensembles de secondes vis de serrage (17) s'étendent à travers des trous de boulons (161) dans les plaques de serrage (16) et dans les ensembles de seconds trous filetés (125, 135) de la tête de broche (12) et de l'écrou (13), respectivement.

2. L'ensemble broche (1) selon la revendication 1, dans lequel une rondelle (18) est arrangée dans une seconde face d'extrémité orientée vers l'intérieur (123, 133) sur l'une de la tête de broche (12) et de l'écrou (13) qui est pourvue d'un ensemble de premières vis de serrage (14).

3. L'ensemble broche (1) selon la revendication 2, dans lequel la rondelle (18) est faite d'un matériau durci.

4. L'ensemble broche (1) selon la revendication 1, dans lequel les premiers trous filetés (124, 134) et les seconds trous filetés (125, 135) sont distribués sur un cercle primitif ordinaire.

5. L'ensemble broche (1) selon la revendication 1, dans lequel les premiers trous filetés (124, 134) et les seconds trous filetés (125, 135) sont distribués sur des cercles primitifs séparés.

6. L'ensemble broche (1) selon la revendication 1, dans lequel les trous filetés de chaque ensemble de premiers et seconds trous filetés (124, 134 ; 125, 135) sont espacés de manière régulière et angulaire.

7. L'ensemble broche (1) selon la revendication 1, dans lequel la tête de broche (12) est formée d'un second écrou (13a) arrangé sur une seconde partie filetée (111a) sur la broche (11).

8. Un raccord à brides comprenant :
l'ensemble broche (1) selon la revendication 1 ; et
une première et une seconde bride (2, 2a), chacune comprenant un ensemble de trous de broche correspondant (21) disposant de parties d'extrémité au trou de goupille renfoncé (211) orienté vers l'opposé d'une surface de butée de bride (22), les parties d'extrémité au trou de goupille renfoncé (211) étant définies par des surfaces de paroi cylindriques (213) et des surfaces inférieures (212) qui sont perpendiculaires aux axes centraux des trous de goupille (21) ;
dans lequel les surfaces de manchon externes cylindriques (152) des manchons de palier (15) sont arrangées pour s'appuyer de manière à être soutenues contre les surfaces de paroi cylindriques (213) des parties d'extrémité au trou de goupille renfoncé (211), et
dans lequel l'ensemble de premières vis de serrage (14) est arrangé pour que les faces d'extrémité disposant de vis (141) s'appuyent de manière à être soutenues contre les surfaces inférieures (212) des parties d'extrémité à trou de goupille renfoncé (211).

9. Le raccord à brides selon la revendication 8, dans lequel une rondelle (18) est arrangée dans une seconde face d'extrémité orientée vers l'intérieur (123, 133) sur l'une de la tête de broche (12) et de l'écrou (13) qui est pourvue d'un ensemble de premières vis de serrage (14).

10. Le raccord à brides selon la revendication 9, dans lequel la rondelle (18) est faite d'un matériau durci.

11. Le raccord à brides selon la revendication 8, dans lequel la tête de broche (12) est formée d'un second écrou (13a) arrangé sur une seconde partie filetée (111a) sur la broche (11).
